# EUROPÄISCHE PATENTSCHRIFT

(11) **EP 0 318 671 B1**
(45) Veröffentlichungstag und Bekanntmachung des Hinweises auf die Patenterteilung: **02.03.1994**
(21) Anmeldenummer: 88116422.2
(22) Anmeldetag: 05.10.1988
(51) Int. Cl.: F16F 9/02

(54) **Pneumatischer Stossdämpfer**
Pneumatic shock absorber
Amortisseur pneumatique de chocs

(30) Priorität: 01.12.1987 DE 3740669
(43) Veröffentlichungstag der Anmeldung: 07.06.1989
(60) Teilanmeldung: 93103546.3
(73) Patentinhaber: Festo KG, D-73734 Esslingen (DE)
(72) Erfinder: Stoll, Kurt, D-7300 Esslingen (DE); Halama, Herbert, D-7314 Wernau (DE)
(74) Vertreter: Vetter, Hans, Dipl.-Phys. Dr.

(56) Entgegenhaltungen:
- BE-A- 494 915
- DE-A- 3 246 731
- DE-U- 8 704 728
- FR-A- 627 916
- FR-A- 2 377 021
- GB-A- 2 090 940
- US-A- 2 154 489
- US-A- 3 956 973
- US-A- 4 588 953
- ENGINEERING, Band 225, Nr. 5, Mai 1985, Seite 296; "Transdusers withstandpressure and vacuum"
- PATENT ABSTRACTS OF JAPAN, Band 7, Nr. 187 (M-236)[1332], 16. August 1983;& JP-A-58 88 241 (SHOWA DENSEN DENRAN K.K.) 26-05-1983
- PATENT ABSTRACTS OF JAPAN, Band 7, Nr. 261 (M-257)[1406], 19. November 1983;& JP-A-58 142 049 (HITACHI SEISAKUSHO K.K.) 23-08-1983
- PATENT ABSTRACTS OF JAPAN, Band 7, Nr. 177 (M-233)[1322], 5. August 1983;& JP-A-58 81 246 (NISSAN JIDOSHA K.K.) 16-05-1983
- HYDRAULICS & PNEUMATICS, Band 39, Nr.5, Mai 1986, Seiten 56-63,106-107; E. JACOBS et al.: "Making fluid powercylinders "smart""
- MACHINE DESIGN, Band 56, Nr. 16, Juli 1984, Seiten 97-99; D.D. PAYNE: "Sensingthe position of pneumatic cylinders"

## Beschreibung

Die Erfindung betrifft einen pneumatischen Stoßdämpfer nach der Gattung des Hauptanspruchs.

Die Steigerung der Produktivität einer Maschine geht oft parallel mit der Steigerung der Geschwindigkeit der eingesetzten Antriebe. Selbst pneumatische Antriebe erreichen heute Geschwindigkeiten von 3 m/s und mehr. Um harte Schläge, Lärm oder Erschütterungen in erträglichen Grenzen zu halten, werden neben den seit langem bekannten Methoden zur Energieumwandlung in den Endlagen durch pneumatische Endlagendämpfung oder durch hydrauliche Stoßdämpfer in neuerer Zeit auch pneumatische Stoßdämpfer eingesetzt, und zwar vor allem dort, wo aus geometrischen Gründen eine pneumatische Dämpfung nicht im pneumatischen Linearantrieb integriert werden kann. Die Vorteile des pneumatischen Stoßdämpfers liegen vor allem in seinem geringeren Gewicht, in seiner Verwendbarkeit für höhere Frequenzen und in seiner weitgehenden Unempfindlichkeit gegen eine Erhöhung der Betriebstemperatur. Darüber hinaus kann ein weicherer Dämpfungsbeginn erzielt werden. Im Gegensatz zum hydraulischen Stoßdämpfer kann er vor allem auch unbedenklich in der Lebensmittelindustrie und Medizin-Einsatz eingesetzt werden, da er keine Verschmutzung verursacht. Die Energieumwandlung pro Zeiteinheit ist wesentlich höher gegenüber dem hydraulischen Stoßdämpfer.

Ein aus der GE-87 04 728.4 bekannter pneumatischer Stoßdämpfer der eingangs genannten Gattung weist neben einem einlaßseitigen Rückschlagventil ein auslaßseitiges Überdruckventil mit einem zweiteiligen Ventilkolben auf. Dies ist zum Teil deshalb erforderlich, um die bei einem Stoß im Druckraum komprimierte Luft herauszulassen, wodurch ein Zurückfedern vom Endanschlag verhindert werden soll, und weiterhin wird mit diesem Überdruckventil ein Druckluftverlust der über das Rückschlagventil einströmenden Druckluft im unbelasteten Zustand verhindert. Zur Anpassung an verschiedene Stoßenergien bzw. zu dämpfende Massen kann der Vordruck im Druckraum eingestellt werden. Da da Auslaßventil stets bei einem bestimmten, eingestellten Druckwert öffnet, erfolgt dieses Öffnen bei einem höheren Vordruck wesentlich früher als bei einem geringeren Vordruck. Der Dämpfungsdruck hängt somit in unerwünschter Weise sehr stark vom eingestellten Vordruck ab.

Ein weiterer Nachteil besteht darin, daß das Auslaßventil lediglich durch eine Gasfeder beaufschlagt ist. Dies führt zu einem relativ groß dimensionierten Ventilkolben.

Die Aufgabe der vorliegenden Erfindung besteht darin, einen pneumatischen Stßdämpfer der eingangs genannten Gattung zu schaffen, der auch bei sich veränderndem Vordruck im wesentlichen gleichbleibende Dämpfungseigenschaften aufweist, d. h., bei dem der Öffnungszeitdruck des Auslaßventils weitgehend unabhängig vom eingestellten Vordruck ist.

Diese Aufgabe wird durch die kennzeichnenden Merkmale des Anspruchs 1 gelöst.

Die Vorteile eines solchen Stoßdämpfers bestehen insbesondere darin, daß eine Zwangsöffnung des Auslaßventils bei einer bestimmten Kolbenstellung des Dämpfungskolbens unabhängig von den voreingestellten oder herrschenden Druckverhältnissen durch den Stößel erfolgt.

Besonders zweckmäßig ist diese Ausgestaltung dann, wenn die zweite Teilkammer mit dem Druckraum verbunden ist. Während des gesamten Dämpfungswegs herrscht somit Druckgleichheit auf beiden Seiten des Ventilkolbens, wodurch dieser durch eine geringe Federkraft am Ventilsitz gehalten werden kann. Erst beim Auftreffen des Dämpfungskolbens auf den Stößel kurz vor Erreichen der Endposition wird das Auslaßventil somit geöffnet. Ist die Druckangriffsfläche auf den Ventilkolben in der zweiten Teilkammer größer als die den Ventilsitz verschließende Fläche, so erhöht sich die Haltekraft des Ventilkolbens am Ventilsitz, so daß auch durch Strömungsverhältnisse bedingte zeitverzögerte Druckverläufe ein vorzeitiges Öffnen des Auslaßventils nicht zu befürchten ist.

Durch die in den Unteransprüchen und Nebenansprüchen aufgeführten Merkmale sind vorteilhafte Weiterbildungen und Verbesserungen des im Anspruch 1 angegeben Stoßdämpfers möglich.

Eine vorteilhafte Anordnung besteht darin, daß die zum Auslaßventil und Rückschlagventil führenden Kanäle von der zum Druckraum begrenzten Stirnfläche des Zylinders ausgehen, bzw. in oder an dieser angeordnet sind. Hierdurch ist die gesamte Ventilsteuerung kompakt an einem Zylinderende angeordnet.

Die zweite Teilkammer kann auch mit der Druckquelle verbunden sein, und die Druckangriffsfläche auf den Ventilkolben in der zweiten Teilkammer entspricht im wesentlichen der den Ventilsitz verschließenden Fläche. In diesem Falle wird lediglich der Vordruck am Ventilkolben, also am Auslaßventil, kompensiert, so daß dieser keinen Einfluß auf das Ventilverhalten ausüben kann. In Abhängigkeit der Kraft der Ventilfeder kann sich das Auslaßventil bei einem Dämpfungsvorgang sehr schnell öffnen, wobei das Dämpfungsverhalten dann in der Folge vom Strömungswiderstand des Auslaßkanals bzw. einer in diesem angeordneten Drossel bestimmt ist. Diese kann zur Anpassung an verschiedene gewünschte Dämpfungseigenschaften auswechselbar oder einstellbar sein. Die Ventilfeder kann selbstverständlich auch so ausgebildet sein, daß das Auslaßventil sehr spät öffnet. Auch in diesem Falle erweist sich der Stößel an diesem Ventilkolben zu dessen zwangsläufigem öffnen kurz vor Erreichen der Endanschlagstellung als vorteilhaft.

Die die Kanalmündung aufweisende Stirnfläche des Zylinders oder die dieser Stirnfläche zugewandte Kolbenfläche ist zweckmäßigerweise mit einer wenigstens die Kanäle in der Anschlagposition verschließenden Dichtung versehen, die insbesondere als flächiger Dichtbelag ausgebildet sein kann. Hierdurch erfolgt in jedem Falle eine Abdichtung des zur Druckquelle führenden Kanals in bezug auf den Auslaßkanal, was vor allem dann erforderlich ist, wenn der Ventilkolben einen diesen in der Anschlagstellung offen haltenden Stößel aufweist.

Bei einer Ausbildung mit einem solchen Stößel dient die Ventilfeder auch vorzugsweise zum Losbrechen des Dämpfungskolbens von seiner Anschlagstellung, wenn auf ihn keine Kraft seitens der zu dämpfenden Massen mehr ausgeübt wird.

Maßgeblich für die Dämpfungseigenschaften ist der eingestellte Vordruck im Druckraum mittels der externen Druckquelle. Diese kann beispielsweise ein einstellbares Druckregelventil aufweisen, über das der Vordruck im Druckraum so eingestellt wird, daß der Kolben durch den Aufprall der zu dämpfenden Masse gerade die zweite Anschlagstellung erreicht. Ändert sich die Aufprallenergie der zu dämpfenden Masse, so muß der Vordruck zweckmäßigerweise neu eingestellt werden, was im übrigen auch zur Anpassung an verschiedenen Einsatzorten grundsätzlich erforderlich ist. Im Einzelfall, z. B. bei sich ständig ändernder Aufprallenergie, kann sich dies als sehr umständlich erweisen.

Das manuelle Einstellen des Vordrucks zur Optimierung der Dämpfungseigenschaften kann vorteilhafterweise dadurch entfallen, daß die externe Druckquelle über einen Druckregler mit dem Druckraum verbunden ist und daß ein die Bewegung und/oder Stellung des Kolben wenigstens im Bereich minimalen Druckraumvolumens erfassender Sensor sowie ein auf den Druckregler in Abhängigkeit des Sensorsignals einwirkender Druckregelkreis vorgesehen ist. Auf diese Weise kann bei jedem Dämpfungsvorgang automatisch geprüft werden, ob der Vordruck zu hoch oder zu niedrig ist, und daraufhin wird über den Druckregelkreis automatisch eine entsprechende Korrektur vorgenommen. Sowohl eine manuelle Ersteinstellung wie auch eine Nachstellung bei sich verändernden Verhältnissen kann dadurch entfallen. Das Dämpfungsverhalten wird immer automatisch auf ein Optimum eingestellt bzw. nachgestelt, so daß der Einsatz insbesondere für Anwendungen mit variabler Aufprallenergie besonders günstig ist.

Der Druckregelkreis weist vorzugsweise eine elektronische Regelvorrichtung auf, durch die der vom Druckregler vorgegebene Druck beim Abprallen des Kolbens von der bei minimalem Druckraumvolumen auftretenden zweiten Anschlagstellung erhöht und bei Nichterreichen dieser zweiten Anschlagstellung verringert wird.

Eine noch feinere Einstellung der optimalen Dämpfungseigenschaften kann dadurch erreicht werden, daß der mit der Regelvorrichtung verbundene Sensor zur Erkennung des Erreichens der zweiten Anschlagstellung sowie wenigstens einer weiteren, vor dieser liegenden Stellung ausgebildet ist, wobei bei Nichterreichen beider Stellungen eine größere Druckverringerung und bei Nichterreichen nur der zweiten Anschlagstellung eine kleinere Druckverringerung auslösbar ist. Eine weitere Verfeinerung wird dadurch erreicht, daß bei einer unter einem vorgebbaren Grenzwert liegenden Annäherungsgeschwindigkeit an die zweite Anschlagstellung der Druck des Druckreglers verringert wird. Vor allem die Kombination dieser Maßnahmen führt zu der angestrebten weiteren Verfeinerung, indem bei jeweils einmaligem Erreichen der beiden Stellungen und Unterschreitung des vorgebbaren Grenzwerts eine noch kleine Druckverringerung auslösbar ist.

Auch die Nachregelung bei zu geringem Druck kann dadurch verfeinert werden, daß bei Überschreitung einer vorgebbaren Zahl von das Erreichen der zweiten Anschlagstellung kennzeichnenden Sensorsignalen eine Druckerhöhung auslösbar ist und/oder daß bei einmaligem Erreichen der zweiten Anschlagstellung und zweimaligem Erreichen einer weiteren, vor dieser liegenden Stellung ebenfalls eine Druckerhöhung auslösbar ist. Auch diese Maßnahmen können zur Erreichung einer noch exakteren Einstellung kombiniert werden, indem die Druckerhöhungen in diesen Fällen unterschiedlich abgestuft sind, insbesondere indem im ersten Falle eine geringere und zweiten Falle eine höhere Druckerhöhung eingeregelt wird. Auf diese Weise lassen sich Schwingungen in der Endlage mit Erfolg verhindern.

Zweckmäßigerweise wird durch den Sensor oder einen weiteren Sensor noch eine die Dämpfungsbewegung des Kolbens erfassende, außerhalb des Bereichs eines möglichen Zurückprallens des Kolbens von der zweiten Anschlagstellung liegende Stellung zusätzlich erfasst, wobei ein beim Passieren dieser Stellung ausgelöstes Sensorsignal eine notwendige Bedingung für einen Druckregelvorgang darstellen kann. Dieses Sensorsignal dient auch vorzugsweise zur Auslösung des Starts eines Regelprogramms in der als Mikrorechner ausgebildeten elektronischen Steuervorrichtung.

Ausführungsbeispiele der Erfindung sind in der Zeichnung dargestellt und in der nachfolgenden Beschreibung näher erläutert.
Es zeigen:
- Fig. 1: einen Stoßdämpfer im Längsschnitt als erstes Ausführungsbeispiel der Erfindung,
- Fig. 2: einen weiteren Stoßdämpfer im Längsschnitt als zweites Ausführungsbeispiel
- Fig. 3: eine vergrößerte Teildarstellung des in Fig. 2 dargestellten Dämpfungskolbens,
- Fig. 4: einen schematisch dargestellten Stoßdämpfer in Verbindung mit einem Druckregelkreislauf für den Vordruck des Druckraumes,
- Fig. 5: typische, den Bewegungsablauf des Kolbens darstellende Kennlinien bei unterschiedlichem Vordruck und
- Fig. 6: ein Flußdiagramm zur Erläuterung der Wirkungsweise des Druckregelkreises.

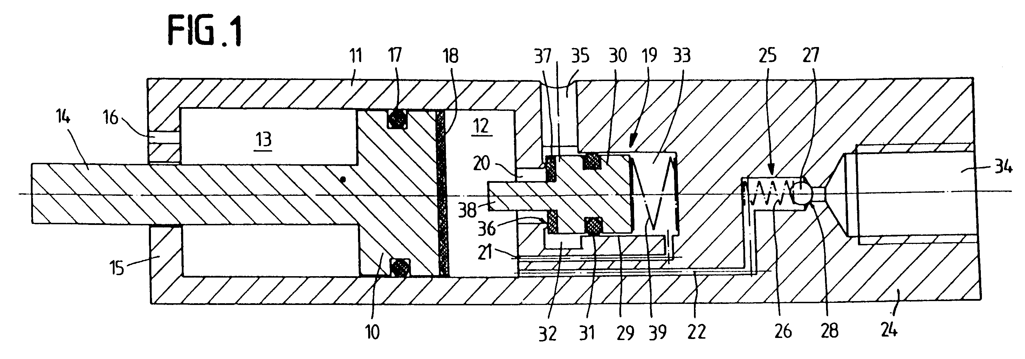

Bei dem in Fig. 1 dargestellten Ausführungsbeispiel ist ein Kolben 10 in einem Zylinder 11 verschiebbar angeordnet. Der Innenraum des Zylinders 11 wird durch den Kolben 10 in einen Druckraum 12 und in einen zweitern Zylinderraum 13 unterteilt. Eine mit dem Kolben 10 verbundene Kolbenstange 14 erstreckt sich durch die gemäß der Darstellung linke Stirnwandung 15 des Zylinders 11. Der zweite Zylinderraum 13 ist über einen Druckausgleichskanal 16 in der linken Stirnwandung 15 mit dem Außendruck beaufschlagt, so daß dort weder ein Unterdruck, noch ein Überdruck entstehen kann. In die Umfangsfläche des Kolbens 10 ist ein den Kolben abdichtender O-Ring 17 eingelassen. Weiterhin ist die den Druckraum 12 begrenzende Stirnfläche des Kolbens 10 mit einem Dichtbelag 18 versehen, durch den zwei zu einem Auslaßventil 19 führende Kanäle 20, 21 sowie ein zu einem Rückschlagventil 25 führender Kanal 22 dichtend verschließbar ist, wenn der Kolben von seiner linken ersten Anschlagstellung ausgehend seine zweite, rechte Anschlagstellung an der Innenseite einer rechten Stirnwandung 24 des Zylinders 11 erreicht.

Das in der rechten Stirnwandung 24 eingelassene Rückschlagventil 25 besteht im wesentlichen aus einem von einer Feder 28 beaufschlagten, kugelförmigen Ventilglied, das gegen einen Ventilsitz 28 in der Anlage gehalten wird. Selbstverständlich sind noch andere bekannte Ausführungen von Rückschlagventilen einsetzbar.

Das Rückschlagventil 25 ist über einen sich nach außen erstreckenden Anschluß 34 in nicht dargestellter Weise mit einer Druckquelle verbindbar, wobei zweckmäßigerweise zur Einstellung des Druckes ein einstellbares Druckregelventil bzw. ein Druckregler dazwischen geschaltet ist.

Das ebenfalls in der rechten Stirnwandung 24 angeordnete Auslaßventil 19 besteht im wesentlichen aus einem in einer zylinderartigen Ventilkammer 29 verschiebbaren Ventilkolben 30. In diesen ist umfangsseitig zur Abdichtung ein O-Ring 31 eingelassen, so daß die Ventilkammer 29 in zwei gegeneinander abgedichtete Teilkammern 32, 33 unterteilt ist. Die erste Teilkammer 32 auf der linken Seite des Ventilkolbens 30 ist zum einen über den Kanal 20 mit dem Druckraum 12 und zum anderen über einen Auslaßkanal 35 mit der den Zylinder 11 umgebenden Atmosphäre verbunden. Die Mündungskante des in die erste Teilkammer 32 mündenden Kanals 20 ist als Ventilsitz 36 ausgebildet, wobei der Ventilkolben 30 an der entsprechenden Gegenfläche mit einer Ringdichtung 37 versehen ist. Diese Ringdichtung 37 kann selbstverständlich auch in die rechte Stirnwandung 24 so eingelassen sein, daß sie die Mündung des Kanals 20 umgreift.

Von der linken Stirnseite des Ventilkolbens 30 aus erstreckt sich ein Stößel 38 durch den Kanal 20 hindurch bis in den Druckraum 12 hinein, so daß der Ventilkolben 30 mittels des Kolbens 10 gegen die Kraft einer in der zweiten Teilkammer 33 angeordneten Ventilfeder 39 vom Ventilsitz 36 weg in die Ventilkammer 29 hineingeschoben werden kann, so daß die Verbindung des Druckraumes 12 zum Auslaßkanal 35 frei wird.

Das in Fig. 1 dargestellte Ausführungsbeispiel dient als pneumatischer Stoßdämpfer. Über den Anschluß 34 und das Rückschlagventil 25 ist der Druckraum 12 mit einem einstellbaren Vordruck beaufschlagt, wobei dieser Vordruck durch einen Druckregler, ein einstellbares Druckregelventil od.dgl. in Abhängigkeit der gewünschten Dämpfungseigenschaften und der auftreffenden, zu dämpfenden Stöße eingestellt werden kann.

Im Grundzustand liegt der Kolben 10 an der linken Stirnwandung 15 an, befindet sich also in seiner ersten Anschlagstellung und wird dort durch den Vordruck im Druckraum 12 gehalten, der vom Anschluß 34 her über das Rückschlagventil 25 zugeführt wird. Der Ventilkolben 30 befindet sich in der gezeichneten Stellung, in der er zum einen durch die Kraft der Feder 39 gehalten wird und zum anderen durch den Vordruck in der zweiten Teilkammer 33, der über den Kanal 21 zugeführt wird. Da die wirksame Fläche des Ventilkolbens 30 in der zweiten Teilkammer 33 größer als die den Ventilsitz 36 verschließende Fläche ist, bewirkt dieser Vordruck zusätzlich eine Kraft auf den Ventilkolben 30 in Richtung des Ventilsitzes 36.

Wird nun ein zu dämpfender Stoß über die Kolbenstange 14 auf den Kolben 10 übertragen, so bewegt sich dieser unter Verringerung und Komprimierung des Druckraumvolumens von der linken ersten Anschlagstellung weg. Das Auslaßventil 19 bleibt geschlossen, da der sich vergrößernde Druck im Druckraum 12 gleichermaßen in der zweiten Teilkammer 33 über eine größere Fläche auf den Ventilkolben 30 einwirkt.

Der Druck im Druckraum 12 steigt so lange an, bis der Kolben 10 den Stößel 38 erreicht und über diesen den Ventilkolben 30 in die Ventilkammer 29 hineinschiebt. Der Druck im Druckraum 12 kann sich nunmehr über den Kanal 20 und den Auslaßkanal 35 abbauen. Da das bei Dämpfungsbeginn vorhandene Luftvolumen bis kurz vor Erreichen der zweiten Anschlagstellung komprimiert wird, kann bezüglich der zu verrichtenden Gasarbeit eine nahezu maximale Energieausbeute erfolgen. Das Entlüften erfolgt beim Öffnen des Ventilkolbens 30 schlagartig, kann selbstverständlich jedoch auch durch eine Drosselblende begrenzt werden.

In der zweiten Anschlagstellung wird der Ventilkolben 30 zwangsweise in seiner geöffneten Stellung gehalten. Das über das nunmehr geöffnete Rückschlagventil 25 nachströmende Druckmedium wird jedoch an der Mündung des Kanals 22 durch den Dichtbelag 18 abgedichtet, so daß es nicht über den Auslaßkanal 35 ausströmen kann.

Anstelle des Dichtbelages 18 kann der Ventilkolben 30 eine der Ringdichtung 37 im wesentlichen entsprechende Ringdichtung am gegenüberliegenden Ende aufweisen, die in der eingeschobenen Stellung des Ventilkolbens 30 die Mündung des Kanals 21 in die zweite Teilkammer 33 verschließt. In diesem Falle führt der Kanal 22 vom Rückschlagventil 25 aus nicht zum Druckraum 12 sondern zur zweiten Teilkammer 33. In der zweiten Anschlagstellung wird dadurch das Einströmen von Druckluft in den Druckraum 12 durch diese zusätzliche Ringdichtung verhindert und der Stoßdämpfer kann als Festanschlag verwendet werden. Es ist hierbei unerheblich, ob durch den Ventilkolben 30 in der eingefahrenen Stellung die Mündung des Kanals 21 oder die Mündung des Kanals 22 dichtend verschlossen ist. Entsprechend der Mündung dieser Kanäle muß diese zusätzliche Dichtung am Ventilkolben 30 oder an der Innenwandung der zweiten Teilkammer 33 angeordnet sein.

Entfällt die Haltekraft an der Kolbenstange 14, so wird der Kolben 10 durch die Kraft der Ventilfeder 39 über den Stößel 38 von der zweiten Anschlagstellung weggeschoben, und es kann nun wieder Druckmittel über den Kanal 22 in den Druckraum 12 einströmen, durch das zum einen der Ventilkolben 30 in seiner Absperrstellung gehalten wird und zum anderen der Kolben 10 wieder in die erste Anschlagstellung zurückgefahren wird.

Bei dem beschriebenen Stoßdämpfer mit wegabhängiger Schnellentlüftung über das Auslaßventil 19 erfolgt die Energieanpassung nur über den eingestellten Vordruck im Druckraum 12. Unterschreitet bei einem bestimmten Vordruck die Antriebsenergie der Kolbenstange 14, also die zu dämpfende Stoßenergie,die entsprechende Mindestenergie, so kann der Kolben 10 nicht die zweite Anschlagstellung erreichen, da die komprimierte Luft nicht abströmen kann. Will man diesen Fall berücksichtigen, so kann die dem Druckraum zugewandte Fläche des Ventilkolbens 30 in zwei gegeneinander abgedichtete und in der Bewegungsrichtung des Ventilkolbens gegeneinander und auseinander bewegbare Teilflächen aufgeteilt werden, wobei die äußere Ringfläche über ein Rückschlagventil mit dem Druckraum verbunden ist. Erfolgt nach dem Druckanstieg wieder ein Druckabfall, ohne daß der Ventilkolben geöffnet worden wäre, so bleibt in der äußeren Ringfläche infolge des Rückschlagventils die maximal aufgetretene Druckspitze erhalten und die komprimierte Luft kann abströmen. Der sich ergebende Druckabfall im Stoßdämpfer ermöglicht das Erreichen der zweiten Anschlagstellung, wobei hier wiederum eine wegabhängige Entlüftung über den Stößel 38 erfolgt. Eine derartige Ausbildung des Ventilkolbens kann vorteilhaft und auf relativ einfache konstruktive Weise erreicht werden, sofern die beschriebene Zusatzfunktion erwünscht ist.

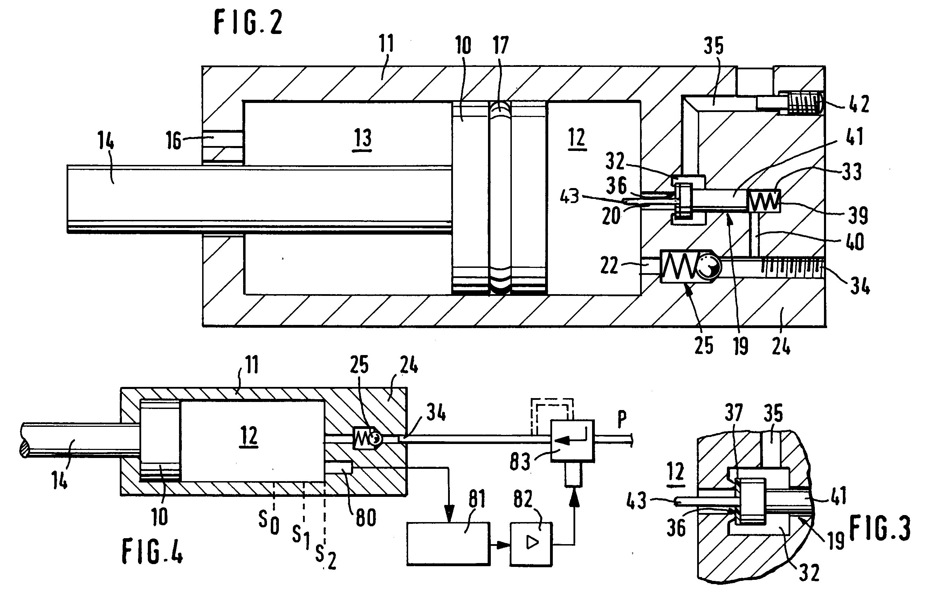

Das in den Fig. 2 und 3 dargestellte zweite Ausführungsbeispiel entspricht vom Aufbau her weitgehend dem in Fig. 1 dargestellten ersten Ausführungsbeispiel . Gleiche oder gleichwirkende Bauteile sind mit denselben Bezugszeichen versehen und nicht nochmals beschrieben. Im Unterschied zum ersten Ausführungsbeispiel ist nunmehr die zweite Teilkammer 33 des Auslaßventils 19 über einen Kanal 40 mit dem Anschluß 34, also direkt mit der Druckquelle, und nicht mehr mit dem Druckraum 12 verbunden. Im Auslaßventil 19 ist der Ventilkolben 30 durch einen Ventilkolben 41 ersetzt, der einen in den Druckraum 12 hineinreichenden Stößel 43 aufweist. Die Druckangriffsfläche in der zweiten Teilkammer 33 auf den Ventilkolben 41 entspricht nunmehr im wesentlichen derjenigen Fläche des Ventilkolbens auf der gegenüberliegenden Seite, durch die der Ventilsitz 36 abgedeckt wird. Im Auslaßkanal 35 ist eine einstellbare Drossel 42 angeordnet, durch die beispielsweise in Abhängigkeit von Spindelumdrehungen ein Rechteckquerschntt mehr oder weniger freigegeben wird.

Da auf den Ventilkolben 41 zunächst von beiden Seiten her über gleiche Flächen der Vordruck einwirkt, erfolgt eine Druckkompensation, so daß dieser Ventilkolben 41 ausschließlich durch die Kraft der Ventilfeder 39 gegen den Ventilsitz 36 gedrückt wird. Diese Kompensation des Vordrucks bleibt auch während des Dämpfungsvorgangs erhalten, da in der zweiten Teilkammer 33 weiterhin dieser Vordruck vorliegt, während der Druck an der gegenüberliegenden Fläche durch den Kompressionshub des Kolbens 10 ansteigt. In Abhängigkeit der Federkraft der Ventilfeder 39 erfolgt ab einem bestimmten Druckwert ein Öffnen des Auslaßventils 19, das z. B. bei geringer Federkraft der Ventilfeder 39 sehr rasch erfolgt. Während des restlichen Kompressionshubs kann der Kompressionsdruck über die Drossel 32 mehr oder weniger schnell entweichen, so daß durch diese Drossel 42 das Dämpfungsverhalten maßgeblich beeinflußbar ist. Bei geringer Federkraft der Ventilfeder 39 bestimmt die Drossel 42 nahezu über den gesamten Kompressionshub die Dämpfung, die dadurch sehr gleichmäßig und kontinuierlich wird. Erreicht der Kolben 10 den Stößel 43, so wird das Auslaßventil 19 durch den Kolben 10 zwangsweise geöffnet, selbst wenn der Druckanstieg im Druckraum 12 hierfür nicht ausreichen würde. Eine derartige Ausführung bietet sich dann an, wenn die Ventilfeder 39 eine große Federkraft aufweist und das Auslaßventil sehr spät geöffnet werden soll.

Entfällt die Haltekraft, so wird der Kolben 10 wiederum durch das über das Rückschlagventil 25 einströmende Druckmittel in die erste Ausgangsstellung zurückgefahren, während das Auslaßventil 19 geschlossen bleibt. Ein Ausströmen dieses Druckmittels ist daher in keiner der beiden Anschlagstellungen zu befürchten.

Fig. 4 zeigt den schematisch dargestellten Zylinder 11 in Verbindung mit einem Druckregelkreis.

Im Bereich der zweiten Anschlagstellung, gemäß der Darstellung in der rechten Stirnwand 24, ist ein Sensor 80 zur vorzugsweise berührungslosen Erfassung der Kolbenbewegung im Bereich der zweiten Anschlagstellung vorgesehen. Dieser Sensor kann beispielsweise als kapazitiver oder induktiver Näherungsgeber ausgebildet sein, wobei verschiedene Positionen durch unterschiedliche Signale erkennbar sind. Selbstverständlich können zur Erkennung mehrerer Positionen auch mehrere derartiger Sensoren vorgesehen sein. Die Geschwindigkeit des Kolbens kann dabei durch die Auswertung der Sensorsignaländerung zusätzlich erfasst werden.

Die Signale des Sensors 80 werden einem Druckregelkreis zugeführt, der aus einer elektronischen Regelvorrichtung 81 besteht, die vorzugsweise als Mikrorechner ausgebildet ist, und deren Ausgang über einen Verstärker 82 einen Druckregler 83 steuert. Dieser Druckregler 83 ist vorzugsweise als Druckregelventil, insbesondere als Druckproportionalventil ausgebildet. Eine Druckquelle P ist über den Druckregler 83 mit dem Anschluß 34 verbunden.

Durch den Druckregelkreis kann der Vordruck im Druckraum 12 optimal eingestellt werden, wobei eine automatische Anpassung bei sich ändernder Stoßbelastung der zu dämpfenden Vorrichtung erfolgt. Dies geschieht prinzipiell dadurch, daß man einen optimalen Dämpfungszustand dann annimmt, wenn der Kolben infolge eines zu dämpfenden Stoßes die zweite Anschlagstellung zügig, jedoch weich erreicht, ohne zurückzuprallen. Prallt er zurück ist der Vordruck zu gering und muß erhöht werden, erreicht er die Anschlagstellung jedoch nicht oder zu langsam, so ist der Vordruck zu hoch und muß reduziert werden.

Der Druckregelkreis kann beispielsweise als kompakte Einheit am Stoßdämpfer angeordnet sein und benötigt lediglich eine Stromversorgung und einen Druckluftanschluß.

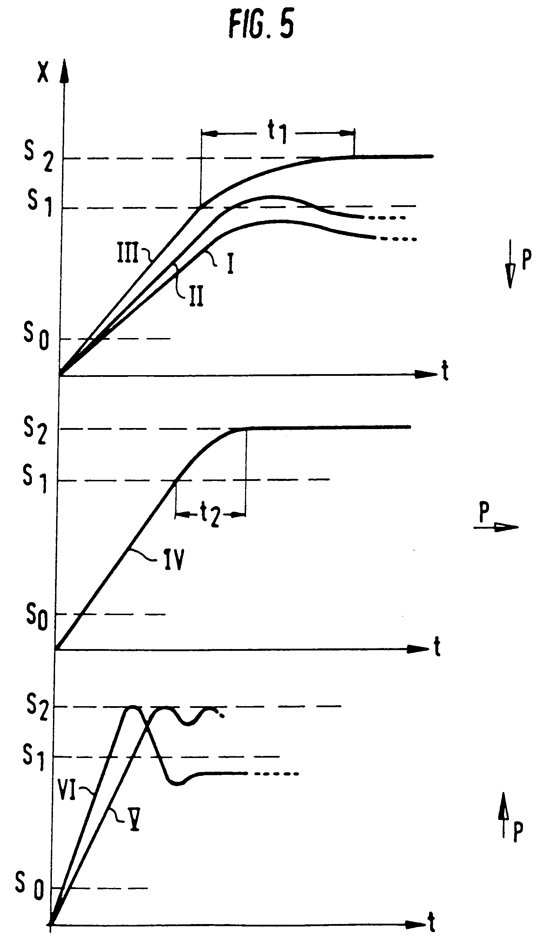

Zur fein abgestuften Druckregelung werden die in Fig. 5 dargestellten Fälle I - VI von unterschiedlichen Bewegungsabläufen des Kolbens 10 unterschieden. Hierzu werden vom Sensor 80 oder zusätzlich durch einen weiteren Sensor 3 Positionen S0, S1 und S2 im Bereich der zweiten Anschlagstellung erfasst. Die Position S0 ist von dieser Anschlagstellung so weit entfernt, daß ein Zurückprallen des Kolbens über diese Stellung hinaus nicht zu erwarten ist, so daß ein gleich bezeichnetes Sensorsignal S0 als Kriterium für eine Kolbenbewegung dienen kann, die den Druckregelkreis aktiviert, bzw. ein Programm des Mikroprozessors in der Regelvorrichtung 81 anlaufen läßt. Die Position S1 liegt nahe der Anschlagstellung S2 und kann bei einem Zurückprallen des Kolbens von der Anschlagstellung einmal oder mehrmal überschritten werden.

Durch die Kurve I ist der Fall eines viel zu hohen Vordruckes dargestellt, d.h., es wird zwar ein Signal S0, jedoch weder ein Signal S1 noch ein Signal S2 erzeugt. Der viel zu hohe Vordruck muß sehr stark abgesenkt werden.

Die Kurve II stellt den Fall dar, daß nach Erzeugung eines Signals S0 zwar die Position S1 einmal oder mehrfach überfahren wird, daß jedoch die Anschlagstellung S2 nicht erreicht wird. Der Vordruck ist immer noch deutlich zu hoch und muß abgesenkt werden.

Die Kurve III stellt den Fall dar, daß sämtliche Positionen einmal erreicht werden, daß also der Kolben ohne abzuprallen sanft gegen die zweite Anschlagstellung geführt wird. Allerdings ist die Zeitspanne t1 zwischen den Positionen S1 und S2 sehr groß, die Geschwindigkeit also sehr gering. Da diese Zeitspanne t1 über einer maximal zulässigen Zeitspanne Tₘₐₓ liegt, ist der Vordruck immer noch geringfügig zu hoch und muß um einen kleinen Betrag abgesenkt werden.

Die Kurve IV stellt den idealen Bewegungsablauf des Kolbens 10 dar, d.h. es wird jeweils ein Signal S0, S1 und S2 erzeugt - wie bei der Kurve III -, jedoch liegt die auftretende Zeitspanne T2 zwischen den Positionen S1 und S2 unterhalb einer höchst zulässigen Zeitspanne Tₘₐₓ und über einer minimal erforderlichen Zeitspanne Tₘᵢₙ. Der Vordruck braucht nicht verändert zu werden.

Der Kurvenverlauf V stellt den Fall eines zu geringen Vordrucks dar, d.h. es wird jeweils ein Signal S0 und S1 erzeugt, jedoch mehrere Signale S2, d.h. der Kolben prallt von der zweiten Anschlagstellung aufgrund einer zu hohen Auftreffgeschwindigkeit einmal oder mehrmals ab. Der Vordruck muß angehoben werden.

Schließlich zeigt der Kurvenverlauf VI den Fall eines viel zu geringen Vordrucks, d.h. der Kolben wird mit so großer Geschwindigkeit gegen die zweite Anschalgstellung geführt, daß die Zurückprallbewegung über die Position S1 hinausgeht. D.h., es wird ein Signal S0 und ein Signal S2 erzeugt, jedoch mehrere Signale S1.

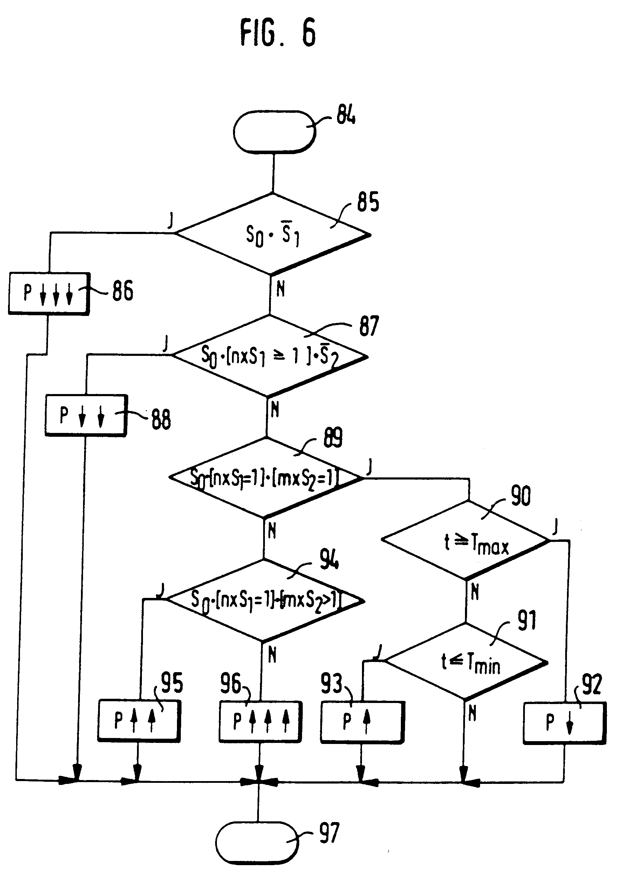

In Fig. 6 ist ein Flußdiagramm zur Erläuterung der Wirkungsweise des Druckregelkreises, bzw. der elektronischen Regelvorrichtung 81 dargestellt. Dabei bedeuten Punkte zwischen Signalen und -Verknüpfungen dieser Signale, während ein Querstrich über einem Signal eine negierende Bedeutung hat, d.h. dieses Signal soll nicht vorliegen.

Nach einem Programmstart 84, der z.B. durch ein Signal S0 oder durch das Einschalten der Versorgungsspannung ausgelöst wird, wird zunächst in einem Prüfschritt 85 geprüft, ob die Verhältnisse der Kurve I vorliegen, also ob nach einem Signal S0 innerhalb einer vorgebbaren Zeitspanne kein Signal S1 auftritt. Ist dies der Fall, so wird in einem Druckreduziervorgang 86 der Vordruck über den Druckregler 83 sehr stark abgesenkt, was sich selbstverständlich erst beim darauffolgenden Dämpfungsvorgang auswirken kann.

Liegt diese Bedingung nicht vor, so wird in einem Prüfschritt 87 geprüft, ob die Verhältnisse der Kurve II vorliegen, also ob ein Signal S0, wenigstens ein Signal S1, jedoch kein Signal S2 erzeugt wird. Ist dies der Fall, so wird in einem Druckreduziervorgang 88 der Vordruck deutlich, jedoch nicht so stark wie beim Vorgang 86 abgesenkt.

Ist auch diese Bedingung nicht erfüllt, so wird im Prüfschritt 89 das Vorliegen der Bedingungen der Kurven III und IV nachgeprüft. Liegen diese Bedingungen vor, so wird noch zusätzlich in den Prüfschritten 90 und 91 geprüft, ob die Zeitspanne t größer oder gleich der maximal zulässigen Zeitspanne Tₘₐₓ oder kleiner oder gleich der Mindestzeitspanne Tₘᵢₙ ist. Im ersten Falle wird im Druckreduziervorgang 92 der Vordruck geringfügig abgesenkt und im zweiten Falle im Druckerhöhungsvorgang 93 der Vordruck geringfügig angehoben. Ist keine der beiden Bedingungen erfüllt, so liegen ideale Verhältnisse vor, und der augenblicklich eingestellte Vordruck wird beibehalten.

Ist die Bedingung des Prüfschritts 89 nicht erfüllt, so wird im Prüfschritt 94 geprüft, ob die durch die Kurve V dargestellten Verhältnisse vorliegen, also ob die Signale S0 und S1 jeweils einmal auftreten, dagegen das Signal S2 wenigstens zweimal erscheint. In diesem Falle wird im Druckerhöhungsvorgang 95 der Vordruck deutlich angehoben. Liegt dagegen die Bedingung des Prüfschritts 94 nicht vor, so können nur noch die durch die Kurve VI dargestellten Verhältnisse vorliegen und der Vordruck wird durch den Druckerhöhungsschritt 96 noch stärker angehoben.

Nach den jeweiligen Vorgängen zur Druckerhöhung oder Druckreduzierung erfolgt das Programmende 97, ist beispielsweise der Programmstart 84 durch das Einschalten der Versorgungsspannung erfolgt, so kann die gesamte Programmfolge auch zyklisch durchlaufen werden.

Selbstverständlich können die Vorgänge zur Veränderung des Vordrucks auch einfacher oder noch feiner unterteilt ausgebildet sein, indem gegenüber der Darstellung in Fig. 5 weniger oder mehr Fallunterscheidungen getroffen werden. Dies kann insbesondere auch durch die Überwachung einer größeren oder geringeren Zahl von Positionen im Bereich der zweiten Anschlagstellung erfolgen. Im einfachsten Fall kann beispielsweise nur das Erreichen der zweiten Anschlagstellung überwacht werden, wobei das Nichterreichen zu einer Druckabsenkung und das Erreichen zu einer Druckerhöhung führt. In diesem Falle erfolgt dann eine Nachregelung des Vordrucks erst nach mehreren Zyklen.

Die dargestellten und beschriebenen pneumatischen Stoßdämpfer können selbstverständlich prinzipiell auch in umgekehrter Richtung dämpfend wirken, also nicht nur beim Hineinstoßen des Kolbens, sondern auch beim Herausziehen desselben. Im zweiten Falle müssen selbstverständlich die beiden Zylinderräume 13 und 12 und die in diesen Zylinderräumen angeordneten Vorrichtungen miteinander vertauscht werden.

## Patentansprüche

1. Pneumatischer Stoßdämpfer, mit einem in einem Zylinder (11) verschiebbaren, eine aus diesem herausragende Kolbenstange (14) aufweisenden Kolben (10), mit einem einen Einlaß bildenden Rückschlagventil (25), über das ein durch den Kolben (10) begrenzter Druckraum (12) im Zylinder (11) mit einer externen Druckquelle (P) verbunden ist, und mit einem bei einer Dämpfungsbewegung des Kolbens (10) die komprimierte Luft auslassenden Auslaßventil (19), wobei das Auslaßventil (19) einen in einer Ventilkammer (29) dichtend geführten und diese in zwei Teilkammern (32, 33) unterteilenden Ventilkolben (30; 41) aufweist, und die erste Teilkammer (32) einen zum Druckraum (12) führenden Kanal (20) mit einem Auslaßkanal (35) verbindet, wobei die zweite Teilkammer (33) mit dem Druckraum (12) oder mit der Druckquelle (P) verbunden ist, dadurch gekennzeichnet, daß die Verbindung zwischen Auslaßkanal (35) und Druckraum (12) durch einen von einer wenigstens teilweise mit dem Druck des Druckraumes (12) beaufschlagten Stirnfläche des Ventilkolbens (30; 41) verschließbaren Ventilsitz (36) unterbrechbar ist, daß eine den Ventilkolben (30; 41) gegen den Ventilsitz (36) drückende Feder (39) vorgesehen ist, daß der Ventilkolben (30; 41) einen bei verschlossenem Ventilsitz (36) in den Druckraum (12) in axialer Richtung hineinreichenden Stößel (38; 43) aufweist, und daß die Druckangriffsfläche auf den Ventilkolben (30; 41) in der zweiten Teilkammer (33) wenigstens der den Ventilsitz (36) verschließenden Fläche entspricht.

2. Stoßdämpfer nach Anspruch 1, dadurch gekennzeichnet, daß die als Druckfeder ausgebildete Feder (39) in der zweiten Teilkammer (33) angeordnet ist.

3. Stoßdämpfer nach Anspruch 1 oder 2, dadurch gekennzeichnet, daß im Auslaßkanal (35) eine vorzugsweise auswechselbare oder einstellbare Drossel (42) vorgesehen ist.

4. Stoßdämpfer nach einem der vorhergehenden Ansprüche, dadurch gekennzeichnet, daß wenigstens der zum Rückscklagventil (25) führende Kanal (22) von der den Druckraum (12) begrenzenden Stirnfläche des Zylinders (11) ausgeht, und daß diese oder die ihr zugewandte Kolbenfläche mit einer den wenigstens einen Kanal in der Anschlagposition verschließenden, insbesondere als flächiger Dichtbelag ausgebildeten Dichtung (18) vorgesehen ist.

5. Stoßdämpfer nach einem der vorhergehenden Ansprüche, dadurch gekennzeichnet, daß ein Kanal (21) zwischen der zweiten Teilkammer (33) und der Stirnfläche des Druckraums (12) vorgesehen ist, an der der Stößel (38; 43) angeordnet ist.

6. Stoßdämpfer nach einem der vorhergehenden Ansprüche, dadurch gekennzeichnet, daß das Rückschlagventil (25) über die zweite Teilkammer (33) mit dem Druckraum (12) verbunden ist, und daß eine wenigstens eine der Kanalmündungen in der zweiten Teilkammer bei eingeschobenem Ventilkolben (30; 41) verschließende Dichtung am Ventilkolben oder der Innenwandung der zweiten Teilkammer vorgesehen ist.

7. Stoßdämpfer nach einem der vorhergehenden Ansprüche, dadurch gekennzeichnet, daß die Druckangriffsfläche auf den Ventilkolben (30) in der zweiten Teilkammer (33) größer als die den Ventilsitz (36) verschließende Fläche ist.

8. Stoßdämpfer nach einem der Ansprüche 1 bis 5, dadurch gekennzeichnet, daß die zweite Teilkammer (33) mit der Druckquelle verbunden ist und daß die Druckangriffsfläche auf den Ventilkolben (41) in der zweiten Teilkammer (33) im wesentlichen der den Ventilsitz (36) verschließenden Fläche entspricht, wobei vorzugsweise die zweite Teilkammer (33) an einen Verbindungskanal von einem zylinderaußenseitigen Druckanschluß (34) zum Rückschlagventil (25) angeschlossen ist.

9. Stoßdämpfer nach einem der vorhergehenden Ansprüche, dadurch gekennzeichnet, daß die dem Ventilsitz (36) zugewandte Stirnfläche des Ventilkolbens (30; 41) mit einer Dichtung (37) versehen ist.

10. Stoßdämpfer nach einem der vorhergehenden Ansprüche, dadurch gekennzeichnet, daß die externe Druckquelle (P) über einen Druckregler (83) mit dem Druckraum (12) verbunden ist und daß ein die Bewegung und/oder Stellung des Kolbens (10) wenigstens im Bereich minimalen Druckraumvolumens erfassender Sensor (80) sowie ein auf den Druckregler (83) in Abhängigkeit des Sensorsignals einwirkender Druckregelkreis (81, 82) vorgesehen ist.

11. Stoßdämpfer nach Anspruch 10, dadurch gekennzeichnet, daß der Druckregelkreis eine elektronische Regelvorrichtung (81) aufweist, durch die der vom Druckregler (83) vorgegebene Druck beim Abprallen des Kolbens (10) von der bei minimalem Druckraumvolumen auftretenden zweiten Anschlagstellung (S2) erhöht und bei Nichterreichen derselben verringert wird.

12. Stoßdämpfer nach Anspruch 11, dadurch gekennzeichnet, daß der mit der Regelvorrichtung (81) verbundene Sensor (80) zur Erkennung des Erreichens der zweiten Anschlagstellung (S2) sowie wenigstens einer weiteren, vor dieser liegenden Stellung (S1) ausgebildet ist, wobei bei Nichterreichen beider Stellungen (S1, S2) eine größere Druckverringerung und bei Nichterreichen nur der zweiten Anschlagstellung (S2) eine kleinere Druckverringerung auslösbar ist.

13. Stoßdämpfer nach Anspruch 11 oder 12, dadurch gekennzeichnet, daß bei einer unter einem vorgebbaren Grenzwert liegenden Annäherungsgeschwindigkeit an die zweite Anschlagstellung (S2) der Druck durch den Druckregler (83) verringerbar ist und/oder daß bei einer über einem zweiten vorgebbaren Grenzwert liegenden Annäherungsgeschwindigkeit an die zweite Anschlagstellung der Druck durch den Druckregler (83) vergrößerbar ist.

14. Stoßdämpfer nach Anspruch 12 und 13, dadurch gekennzeichnet, daß bei jeweils einmaligem Erreichen der beiden Stellungen (S1, S2) und Unterschreitung des ersten vorgebbaren Grenzwerts oder Überschreitung des zweiten vorgebbaren Grenzwerts eine sehr kleine Druckveränderung auslösbar ist.

15. Stoßdämpfer nach Anspruch 13 oder 14, dadurch gekennzeichnet, daß zur Erfassung der Annäherungsgeschwindigkeit die Bewegungszeit (t) zwischen den beiden Stellungen (S1, S2) erfaßbar ist.

16. Stoßdämpfer nach einem der Ansprüche 10 bis 13, dadurch gekennzeichnet, daß bei Überschreitung einer vorgebbaren Zahl von das Erreichen der zweiten Anschlagstellung (S2) kennzeichnenden Sensorsignalen eine Druckerhöhung auslösbar ist.

17. Stoßdämpfer nach einem der Ansprüche 11 bis 16, dadurch gekennzeichnet, daß beim einmaligen Erreichen der zweiten Anschlagstellung (S2) und wenigstens zweimaligem Erreichen einer weiteren, vor dieser liegenden Stellung (S1) eine Druckerhöhung auslösbar ist.

18. Stoßdämpfer nach einem der Ansprüche 11 bis 17, dadurch gekennzeichnet, daß durch den Sensor (80) oder einen weiteren Sensor eine die Dämpfungsbewegung des Kolbens (10) erfassende, außerhalb des Bereichs eines möglichen Zurückprallens des Kolbens von der zweiten Anschlagstellung (S2) liegende Stellung (S0) erfaßbar ist, wobei insbesondere die einmalige Auslösung eines dieser die Dämpfungsbewegung erfassenden Stellung (S0) entsprechenden Sensorsignals als notwendige Bedingung für einen Druckregelvorgang vorgesehen ist.

## Claims

1. Pneumatic shock absorber, with a piston (10) slidable in a cylinder (11) from which extends a piston rod (14), with a non-return valve (25) forming an inlet through which a pressure space (12) in the cylinder (11) bounded by the piston (10) is connected to an external pressure source (P), and with an outlet valve (19) exhausting the compressed air during damping movement of the piston (10), wherein the outlet valve (19) has a valve piston (30; 41) with sealing guidance in a valve chamber (29) which it divides into two sub-chambers (32, 33), with the first sub-chamber (32) connecting a duct (20) leading to the pressure space (12) with an outlet duct (35), while the second sub-chamber (33) is connected to the pressure space (12) or to the pressure source (P), characterized in that the connection between outlet duct (35) and pressure space (12) may be interrupted by a valve seat (36) closable by an end face of the valve piston (30; 41) at least partly under the pressure of the pressure space (12), that a spring (39) pressing the valve piston (30; 41) against the valve seat (36) is provided, that the valve piston (30; 41) has a tappet (38; 43) extending axially into the pressure space (12) when the valve seat (36) is closed, and that the pressure application area on the valve piston (30; 41) in the second sub-chamber (33) corresponds at least to that of the area closing the valve seat (36).

2. Shock absorber according to claim 1, characterized in that the spring (39), designed as a compression spring, is located in the second sub-chamber (33).

3. Shock absorber according to claim 1 or 2, characterized in that a preferably interchangeable or adjustable restrictor (42) is provided in the outlet duct (35).

4. Shock absorber according to any of the preceding claims, characterized in that at least the duct (22) leading to the non-return valve (25) originates at the end face of the cylinder (11) bounding the pressure space (12), and that this or the piston area facing it is provided with a seal (18), in particular in the form of a flat seal lining, sealing at least one duct in the stop position.

5. Shock absorber according to any of the preceding claims, characterized in that a duct (21) is provided between the second sub-chamber (33) and the end face of the pressure space (12) on which the tappet (38; 43) is mounted.

6. Shock absorber according to any of the preceding claims, characterized in that the non-return valve (25) is connected via the second sub-chamber (33) to the pressure space (12), and that at least one of the duct outlets in the second sub-chamber is provided with sealing at the valve piston or the inner wall of the second sub-chamber, acting when the valve piston (30; 41) is pushed in.

7. Shock absorber according to any of the preceding claims, characterized in that the pressure application area on the valve piston (30) in the second sub-chamber (33) is greater than the area closing the valve seat (36).

8. Shock absorber according to any of claims 1 to 5, characterized in that the second sub-chamber (33) is connected to the pressure source and that the pressure application area on the valve piston (41) in the second sub-chamber (33) corresponds essentially to the area closing the valve seat (36), while preferably the second sub-chamber (33) is connected at a connection duct to the non-return valve (25) by a pressure connection (34) on the outside of the cylinder.

9. Shock absorber according to any of the preceding claims, characterized in that the end face of the valve piston (30; 41) facing the valve seat is provided with a seal (37).

10. Shock absorber according to any of the preceding claims, characterized in that the external pressure source (P) is connected to the pressure space (12) via a pressure governor (83) and that a sensor (80) detecting the movement and/or position of the piston (10) at least in the area of minimum pressure space volume is provided, together with a pressure control circuit (81, 82) acting on the pressure governor (83) according to the sensor signal.

11. Shock absorber according to claim 10, characterized in that the pressure control circuit has an electronic control device (81), through which the pressure preset by the pressure governor (83) is increased on rebound of the piston (10) from the second stop position (S2) reached at minimum pressure space volume, and is reduced when the latter is not reached.

12. Shock absorber according to claim 11, characterized in that the sensor (80) connected to the control device (81) is designed to detect the reaching of the second stop position (S2) and also at least one further position (S1) lying before the latter, with a greater pressure reduction being triggerable if neither of the two positions (S1, S2) is reached, and a smaller pressure reduction if only the second stop position (S2) is not reached.

13. Shock absorber according to claim 11 or 12, characterized in that, if the approach speed at the second stop position (S2) lies below a presettable limit value, the pressure is reducible through the pressure governor (83) and/or if the approach speed at the second stop position exceeds a second presettable limit value, the pressure can be increased by the pressure governor (83).

14. Shock absorber according to claims 12 and 13, characterized in that, when each of the two positions (S1, S2) is reached once, and the first presettable limit value is undershot or the second presettable limit value is exceeded, a very small pressure variation can be triggered.

15. Shock absorber according to claim 13 or 14 characterized in that, in order to measure the approach speed, the time of movement (t) between the two positions (S1, S2) can be registered.

16. Shock absorber according to any of claims 10 to 13 characterized in that, if a presettable number of sensor signals indicating the reaching of the second stop position (S2) is exceeded, an increase in pressure can be triggered.

17. Shock absorber according to any of claims 11 to 16 characterized in that, on reaching the second stop position (S2) once and on reaching a further position (S1) lying before it at least twice, an increase in pressure can be triggered.

18. Shock absorber according to any of claims 11 to 17 characterized in that, by means of the sensor (80) or a further sensor, a position (S0) registering the damping movement of the piston (10), lying outside the range of any possible rebound of the piston from the second stop position (S2) is detectable, whereby in particular the single triggering of a sensor signal corresponding to this position (S0) registering the damping movement is provided as a necessary condition for any pressure regulating process.

## Revendications

1. Amortisseur pneumatique de chocs, un piston (10) coulissant dans un cylindre (11) et comportant une tige de piston (14) ressortant du cylindre, avec un clapet anti-retour (25) formant une admission, par l'intermédiaire duquel une enceinte de pression (12), délimitée par le piston (10) est reliée dans le cylindre (11) à une source de pression (P) externe, et avec une soupape d'échappement (19), évacuant l'air comprimé lors d'un déplacement d'amortissement du piston (10), la soupape d'échappement (19) présentant un piston de soupape (30; 41) guidé de façon étanche dans une chambre de soupape (29) et la subdivisant en deux chambres partielles (32, 33), et la première chambre partielle (32) reliant un canal (20) menant à l'enceinte de pression (12) à un canal d'évacuation (35), la deuxième chambre partielle (33) étant reliée à l'enceinte de pression (12) ou à la source de pression (P), caractérisé en ce que la liaison entre le canal d'évacuation (35) et l'enceinte de pression (12) est susceptible d'être interrompue au moyen d'un siège de soupape (36), pouvant être obturé par une face frontale du piston de soupape (30; 41), sollicité au moins partiellement par la pression de l'enceinte de pression (12), en ce qui est prévu un ressort (39) pressant le piston de soupape (30; 41) contre le siège de soupape (36), en ce que le piston de soupape (30; 41) présente un poussoir (38; 43) pénétrant en direction axiale dans l'enceinte de pression (12), lorsque le siège de soupape (36) est fermé, et en ce que la surface d'action de la pression sur le piston de soupape (30; 41), dans la deuxième chambre partielle (33), correspond au moins à la surface d'obturation du siège de soupape (36).

2. Amortisseur pneumatique de chocs selon la revendication 1, caractérisé en ce que le ressort (39) réalisé sous forme de ressort de compression est disposé dans la deuxième chambre partielle (33).

3. Amortisseur pneumatique de chocs selon la revendication 1 ou 2, caractérisé en ce qu'un étranglement (42), pouvant de préférence être changé ou réglé, est prévu dans le canal d'évacuation (35).

4. Amortisseur pneumatique de chocs selon l'une des revendications précédentes, caractérisé en ce qu'au moins le canal (22) menant au clapet anti-retour (25) part de la face frontale du cylindre (11) délimitant l'enceinte de pression (12), et en ce que celle-ci, ou la face de piston tournée vers elle, est prévue avec un joint d'étanchéité (18), obturant le canal dans la position de butée, en particulier un joint réalisé sous forme de revêtement d'étanchéité plat.

5. Amortisseur pneumatique de chocs selon l'une des revendications précédentes, caractérisé en ce qu'un canal (21) est prévu entre la deuxième chambre partielle (33) et la face frontale de l'enceinte de pression (12) sur laquelle est disposé le poussoir (38; 43).

6. Amortisseur pneumatique de chocs selon l'une des revendications précédentes, caractérisé en ce que le clapet anti-retour (25) est relié par la deuxième chambre partielle (33) à l'enceinte de pression (12), et en ce qu'un joint d'étanchéité, obturant au moins l'une des embouchures de canal dans la deuxième chambre partielle lorsque le piston de soupape (30; 41) est enfoncé, est prévu sur le piston de soupape ou sur la paroi intérieure de la deuxième chambre partielle.

7. Amortisseur pneumatique de chocs selon l'une des revendications précédentes, caractérisé en ce que la surface d'action de la pression sur le piston de soupape (30) dans la deuxième chambre partielle (33) est plus grande que la surface obturant le siège de soupape (36).

8. Amortisseur pneumatique de chocs selon l'une des revendications 1 à 5, caractérisé en ce que la deuxième chambre partielle (33) est reliée à la source de pression et en ce que la surface d'action de la pression sur le piston de soupape (41) dans la deuxième chambre partielle (33) correspond sensiblement à la surface obturant le siège de soupape (36), la deuxième chambre (3) étant de préférence raccordée à un canal de liaison, allant d'un raccordement de pression (34) situé du côté extérieur du cylindre au clapet anti-retour (25).

9. Amortisseur pneumatique de chocs selon l'une des revendications précédentes, caractérisé en ce que la face frontale, tournée vers le siège de soupape (36), du piston de soupape (30; 41) est pourvue d'un joint d'étanchéité (37).

10. Amortisseur pneumatique de chocs selon l'une des revendications précédentes, caractérisé en ce que la source de pression externe (P) est reliée à l'enceinte de pression (12) par l'intermédiaire d'un régulateur de pression (83) et en ce qu'un capteur (80) détectant le déplacement et/ou la position du piston (10), au moins dans la zone du volume minimal de l'enceinte de pression est prévu, ainsi qu'un circuit de régulation de pression (81, 82) agissant sur le régulateur de pression (83), en fonction du signal de capteur.

11. Amortisseur pneumatique de chocs selon la revendication 10, caractérisé en ce que le circuit de régulation de pression présente un dispositif de régulation électronique (81), au moyen duquel la pression prédéterminée par le régulateur de pression (83) est augmentée lors du rebondissement du piston (10), depuis la deuxième position de butée (S2) survenant lorsque le volume de l'enceinte de pression est minimal, et est diminuée lorsque cette deuxième position de butée (S2) n'est pas atteinte.

12. Amortisseur pneumatique de chocs selon la revendication 11, caractérisé en ce que le capteur (80) relié au dispositif de régulation (81) est conçu pour identifier l'atteinte de la deuxième position de butée (S2), ainsi que d'au moins une autre position (S1), située avant celle-ci, une diminution de pression plus grande pouvant être déclenchée en cas de non atteinte des deux positions (S1, S2) et une diminution de pression plus petite pouvant être déclenchée en cas de non atteinte seulement de la deuxième position de butée (S2).

13. Amortisseur pneumatique de chocs selon la revendication 11 ou 12, caractérisé en ce que, dans le cas d'une vitesse d'approche, située au-dessous d'une valeur limite prédéterminée, de la deuxième position de butée (S2), la pression peut être diminuée par l'intermédiaire du régulateur de pression (83) et/ou en ce que, dans le cas d'une vitesse d'approche, située au-dessus d'une deuxième valeur limite prédéterminée, de la deuxième position de butée (S2), la pression peut être augmentée par l'intermédiaire du régulateur de pression (83).

14. Amortisseur pneumatique de chocs selon les revendications 12 et 13, caractérisé en ce qu'une variation de pression très petite peut être chaque fois déclenchée, lors de la première atteinte des deux positions (S1, S2) et passage au-dessous de la première valeur limite prédéterminée, ou passage au-dessus de la deuxième valeur limite prédéterminée.

15. Amortisseur pneumatique de chocs selon la revendication 13 ou 14, caractérisé en ce que le temps de déplacement (t) entre les deux positions (S1, S2) peut être détecté, pour mesurer la vitesse d'approche.

16. Amortisseur pneumatique de chocs selon l'une des revendications 10 à 13, caractérisé en ce qu'une augmentation de pression peut être déclenchée en cas de dépassement d'un nombre prédéterminé de signaux de capteur caractérisant l'atteinte de la deuxième position de butée (S2).

17. Amortisseur pneumatique de chocs selon l'une des revendications 11 à 16, caractérisé en ce qu'une augmentation de pression peut être déclenchée en cas de première atteinte de la deuxième position de butée (S2) et au moins de la deuxième atteinte d'une autre position (S1), située avant celle-ci.

18. Amortisseur pneumatique de chocs selon l'une des revendications 11 à 17, caractérisé en ce qu'une position (S0), représentant le mouvement d'amortissement du piston (10), située à l'extérieur de la plage d'un rebond possible du piston depuis la deuxième position de butée (S2) peut être détectée au moyen du capteur (80) ou d'un autre capteur, le premier déclenchement d'un signal de capteur correspondant à cette position (S0) détectant le déplacement d'amortissement étant notamment prévu à titre de condition nécessaire pour un processus de régulation de pression.
